# EUROPEAN PATENT APPLICATION

(11) **EP 4 450 302 A1**
(43) Date of publication of application: **23.10.2024**
(21) Application number: 22907983.5
(22) Date of filing: 15.12.2022
(51) Int. Cl.: B60C 19/00, B60C 9/00

(54) **TIRE COMPRISING SEALANT LAYER AND SOUND-ABSORBING MATERIAL LAYER**

(30) Priority: 15.12.2021 KR 20210179448
(71) Applicant: HANKOOK TIRE & TECHNOLOGY CO., LTD, Gyeonggi-do 13494 (KR)
(72) Inventor: NOH, Kyu Dong, Daejeon 34127 (KR); SEO, Byeong Ho, Daejeon 34127 (KR)
(74) Representative: Westphal, Mussgnug & Partner Patentanwälte mbB
(86) International application number: PCT/KR2022/020512
(87) International publication number: WO 2023/113516

(57) **Abstract**

The present invention relates to a tire including a sealant layer and a sound-absorbing material layer, and the tire includes a sound-absorbing material layer located on the inner surface of the tire, and a sealant layer disposed between the inner surface of the tire and the sound-absorbing material layer, and applied on the inner surface of the tire, wherein the sound-absorbing material layer includes a first porous material having closed cells, and a second porous material having open cells, so that the tire may self-seal in the event of a puncture by including the sealant layer applied on the inner surface of the tire, may have noise reduction performance by including the sound-absorbing material, and even if a nail penetrates the tire and sealant and reaches the sound-absorbing material, may prevent fine fragments of the sound-absorbing material from degrading the function of the sealant and maintain the noise reduction performance.

## Description

### TECHNICAL FIELD

The present invention relates to a tire including a sealant layer and a sound-absorbing material layer, and more specifically, to a tire capable of self-sealing in the event of a puncture and having noise reduction performance.

### BACKGROUND ART

When typical pneumatic tires have punctures due to foreign substances on the road surface during driving, driving stability may be drastically reduced, which may lead to accidents and even human casualties. In order to solve the above-described problem, a tire has been released which is manufactured by applying a special sealing material to the inside of a regular tire, so that even if the tire has a puncture during driving, the special material inside the tire immediately seals the punctured portion to prevent air leakage, thereby allowing continuous driving.

In addition, with the tightening of government regulations on vehicle noise and the expansion of demand for electric vehicles, the demand for reducing noise from tires is gradually increasing. However, in recent tire development trends, ultrahigh performance (UHP) tires having a wide tread part in contact with the road surface of the tire and a low aspect ratio of a side wall corresponding to the side surface of the tires are in the spotlight.

The above-described tire has increased rigidity of the side wall due to a structural characteristic, so that the tire structure itself does not play an appropriate damping role in response to an impact transmitted from the road surface, causing a result in which a sound pressure related to noise induction increases. The above generates air vibration in the cavity of the tire, which transmits the noise to the inside of a vehicle and is detected by the driver, thereby causing a decrease in ride comfort during driving (hereinafter, noise caused by air vibration is collectively referred to as resonance sound). Accordingly, a tire manufacturing company proposed a tire for reducing noise generated in the cavity of a tire by utilizing a foam (a sound-absorbing material) made of a polyurethane material having open cells.

However, unlike a regular tire, a self-sealing tire has a polymer material applied thereinside, so that if a sound-absorbing material capable of reducing the internal noise of a tire is mounted on the polymer material, the sealing performance of a punctured portion is drastically reduced, so that the unique self-sealing function may not be performed.

In addition, if the sound-absorbing material is mounted on another portion, and particularly, if the sound-absorbing material is mounted on a side-wall portion, there may be interference between the tire and a wheel, resulting in breaking the sound-absorbing material. Similarly, if the sound-absorbing material is installed on the wheel, the noise reduction performance is significantly reduced, making it difficult for the sound-absorbing material to perform its function properly.

### DISCLOSURE OF THE INVENTION

### TECHNICAL PROBLEM

An object of the present invention is to solve the problem of the prior art by providing a tire including a sealant layer applied on the inner surface of the tire, thereby being capable of self-sealing in the event of a puncture, and including a sound-absorbing material, thereby having resonance sound-reducing performance, and even if a nail penetrates the tire and sealant and reaches the sound-absorbing material, the tire may prevent fine fragments of the sound-absorbing material from degrading the function of the sealant and maintain the noise reduction performance.

### TECHNICAL SOLUTION

In order to achieve the above-described object, there is provided a tire including a sound-absorbing material layer located on the inner surface of the tire, and a sealant layer disposed between the inner surface of the tire and the sound-absorbing material layer, and applied on the inner surface of the tire, wherein the sound-absorbing material layer includes a first porous material having closed cells, and a second porous material having open cells, and an average cell size of 1,200 um to 2,400 µm.

The sound-absorbing material layer may further include a third porous material stacked on the second porous material and having open cells, wherein one surface of the first porous material is attached to the inner surface of the tire by the sealant layer, the first porous material may be stacked on one surface of the second porous material, and the third porous material may be stacked on the other surface of the second porous material.

The third porous material may have an average cell size of 100 um to 1,200 µm.

The second porous material may have a density of 25 kg/m³ to 40 kg/m3, a hardness of 10 kgf to 20 kgf, a tensile strength of 0.8 kgf/cm² or greater, and an elongation of 70% or greater, and the third porous material may have a density of 20 kg/m³ to 40 kg/m3, a hardness of 10 kgf to 20 kgf, a tensile strength of 0.8 kgf/cm² or greater, and an elongation of 70% or greater.

The thickness of the sound-absorbing material layer may be 20 mm to 60 mm, wherein the thickness of the first porous material may be 1 length% to 60 length% of the total thickness of the sound-absorbing material layer, the thickness of the second porous material may be 30 length% to 90 length% of the total thickness of the sound-absorbing material layer, and the thickness of the third porous material may be 10 length% to 70 length% of the total thickness of the sound-absorbing material layer.

### ADVANTAGEOUS EFFECTS

A tire of the present invention includes a sealant layer applied on the inner surface of the tire, thereby being capable of self-sealing in the event of a puncture, and includes a sound-absorbing material, thereby having noise reduction performance, and even if a nail penetrates the tire and sealant and reaches the sound-absorbing material, the tire may prevent fine fragments of the sound-absorbing material from degrading the function of the sealant and maintain the noise reduction performance.

### BRIEF DESCRIPTION OF THE DRAWINGS

FIG. 1 is a cut-away perspective view of a pneumatic tire according to an embodiment of the present invention.
FIG. 2 is a cut-away perspective view of a pneumatic tire according to another embodiment of the present invention.

### BEST MODE FOR CARRYING OUT THE INVENTION

Hereinafter, embodiments of the present invention will be described in detail with reference to the accompanying drawings, so that those skilled in the art may easily carry out the present invention. However, the present invention may be embodied in many different forms, and is not limited and the embodiments and the drawings described herein.

The present invention is intended to combine two technologies so that both functions may be expressed simultaneously.

First, a sealant tire is a tire which has a special polymer material applied to an inner liner portion in the cavity of the tire, so that if there is a puncture in a tire tread portion by a nail or a sharp foreign object, the special polymer material immediately seals the punctured portion to prevent air leakage, making it possible for a driver to keep driving without having to get off on the shoulder of a road and change the tire during the driving.

Second, a silent tire is a tire which has a foam thereinside, i.e., a porous material having a plurality of cells, which reduces a resonant sound generated by the vibration of an air layer in the cavity of the tire due to the vibration generated on the tire surface during driving.

Currently, the automobile industry is changing rapidly, and rapid development is underway not only for electric vehicles but also for autonomous vehicles. Particularly, a vehicle with such a concept is required to have the above-described two technologies. Since an electric vehicle does not have an internal combustion engine inside the vehicle, there is no noise coming from the engine of the vehicle, so that the sound of rolling tires and other noises are relatively loud.

However, in order to achieve both of the above-described functions simultaneously, the following limitation should be addressed. That is, a typical sound-absorbing material is manufactured by foaming a material such as polyurethane, and thus, has a large number of micropores densely distributed therein. If the sound-absorbing material is attached to sealant applied to an inner liner of a tire, when a foreign substance such as a nail penetrate the tire, the foreign substance reaches a sound-absorbing material layer, and when the nail comes out, fine fragments of the sound-absorbing material stick to the nail and fall off from the sound-absorbing material due to the sticky nature of the sealant, wherein the fine fragments of the sound-absorbing material act as a factor inhibiting the sealing performance of the sealant, or the sound-absorbing material layer having densely formed microcells on a sealant layer and an upper portion of the sealant layer are physically tightly bonded, which degrades the fluidity of the sealant, so that the function of the sealant may be degraded.

In an attempt to address the limitation, if a sound-absorbing material is disposed at which sealant is not applied, other than at which an inner liner is located, or wound around a wheel, the sound-absorbing performance of the sound-absorbing material may be significantly degraded, and the sound-absorbing material hinders the installation of tires on the wheel, which may cause a problem during use.

In addition, there is a method in which the cell size of a sound-absorbing material is increased such that the sound-absorbing material is placed on sealant without interfering the flow of the sealant, and porous residues do not create air holes. In this case, the self-sealing performance of the sealant may be considerably improved in a stationary state, but since the cell size is increased, the sealant is introduced between large cells of the sound-absorbing material by the centrifugal force generated in the tire during driving, which may be cause a problem in which the self-sealing performance is again degraded.

Accordingly, a tire of the present invention includes a sound-absorbing material layer attached to the inner surface of the tire and a sealant layer disposed between the inner surface of the tire and the sound-absorbing material layer, and the sound-absorbing material layer includes a first porous material having closed cells and a second porous material having open cells and an average cell size of 1,200 um to 2,400 µm.

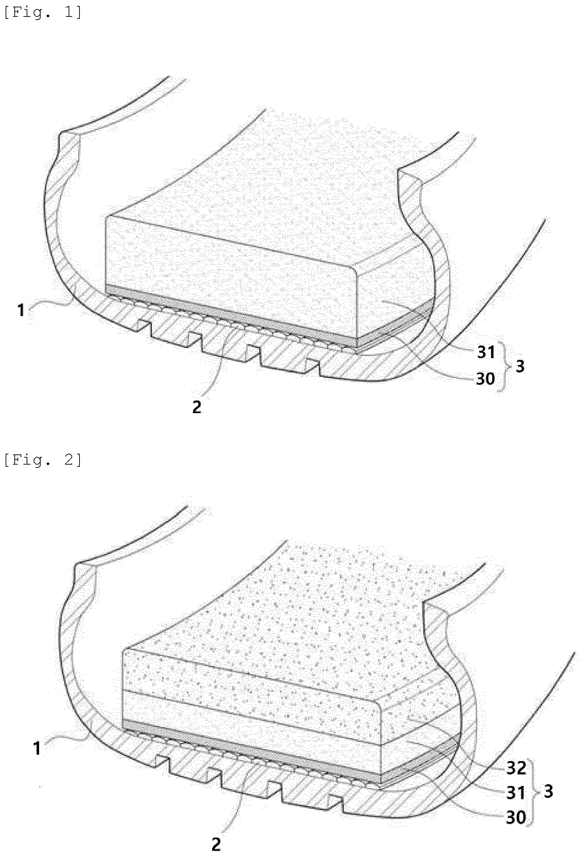

FIG. 1 is a cut-away perspective view of a pneumatic tire according to an embodiment of the present invention.

Referring to FIG. 1, a tire 1 according to the present invention includes a sound-absorbing material layer 3 located on the inside of the tire 1, and a sealant layer 2 located between the inner surface of the tire 1 and the sound-absorbing material layer 3 and applied on the inner surface of the tire 1.

The sealant layer 2 is applied on the inner surface of the tire 1, and when the tire 1 includes an inner liner on the thereinside, the sealant layer 2 may be generally located on the inner liner. In relation to layers located on the inner surface of the tire 1 in the specification of the present invention, when a second layer is located on a first layer, it means that the first layer is located closer to the inner surface of the tire 1 than the second layer, and the second layer is located on the other surface of one surface of the first layer facing the inner surface of the tire 1.

The sealant layer 2 may be applied on a partial surface or the entire surface of the inner surface of the tire 1, and preferably, may be applied only on the inner surface corresponding to a tread of the tire 1. This is because the tread of the tire 1 is the portion in which the tire 1 is mainly penetrated by foreign substances. Accordingly, the width of the sealant layer 2 may be 100 length% to 120 length% with respect to the width of a tread portion of the tire 1.

In addition, the thickness of the sealant layer 2 may be 2 mm to 8 mm. If the thickness of the sealant layer 2 is within the above-described range, self-sealing may be reliably achieved for a puncture caused by a nail or a protrusion without affecting the flow properties of a sealant.

The sealant layer 2 may be prepared by crosslinking a sealant composition including a rubber component or without crosslinking a sealant composition including a crosslinked rubber component. The sealant composition is not limited as long as it has adhesiveness, and a typical rubber composition used for puncture sealing of the tire 1 may be used.

However, as an example, as the sealant composition, a sealant composition including butyl-based rubber as a main component may be used, and also, a sealant composition including a natural rubber-based compound, a silicon-based compound, a urethane-based compound, a styrene-based compound, or an ethylene-based compound may be used.

As the butyl-based rubber, butyl rubber (IIR) or halogenated butyl rubber (X-IIR) such as brominated butyl rubber (Br-IIR) and chlorinated butyl rubber (Cl-IIR) may be used.

In addition, the sealant composition may further include, as a rubber component, di-linked rubber such as natural rubber (NR), isoprene rubber (IR), butadiene rubber (BR), styrene-butadiene rubber (SBR), styrene-isoprene-butadiene rubber (SIBR), ethylene propylene diene rubber (EPDM), chloroprene rubber (CR), and acrylonitrile butadiene rubber (NBR). However, in terms of fluidity, etc., the content of the butyl-based rubber is preferably 90 wt% or greater with respect to 100 wt% of the rubber component.

The sealant composition may further include polyisobutylene, and the polyisobutylene may have a weight average molecular weight of 1,000 g/mol to 10,000 g/mol. In addition, the polyisobutylene may be included in an amount of 100 parts by weight to 500 parts by weight based on 100 parts by weight of the rubber component. If the content of the polyisobutylene is less than 100 parts by weight, the flowability of materials may be degraded, and if greater that 500 parts by weight, the shape stability of the materials may be degraded.

Meanwhile, the sealant composition may further include a liquid polymer. The liquid polymer may be liquid polybutene, liquid polyisobutene, liquid polyisoprene, liquid polybutadiene, liquid polyα-olefin, liquid isobutylene, liquid ethyleneα-olefin copolymer, liquid ethylene propylene copolymer, liquid ethylene butylene copolymer, or the like. The liquid polymer may be included in an amount of 50 parts by weight to 1,000 parts by weight based on 100 parts by weight of the rubber component, and more specifically, may be included in an amount of 150 parts by weight to 500 parts by weight. If the content of the liquid polymer is less than 50 parts by weight, the flowability of materials may be degraded, and if greater than 1,000 parts by weight, the shape stability of the materials may be degraded.

The sealant composition may further include an inorganic additive. The inorganic additive is for adjusting the reinforcement of the sealant composition, and may be selected from the group consisting of carbon black, silica, calcium carbonate, calcium silicate, magnesium oxide, aluminum oxide, barium sulfate, talc, mica, and a mixture thereof. At this time, the inorganic additive may be included in an amount of 10 parts by weight to 100 parts by weight, preferably 30 parts by weight to 60 parts by weight, based on 100 parts by weight of the rubber component.

In addition, the sealant composition may further include an additive selected from the group consisting of a vulcanization agent, a vulcanization accelerator, a vulcanization accelerator aid, an adhesive, and a mixture thereof.

The vulcanization agent helps crosslinking of the sealant composition, and may be included in an amount of 1 part by weight to 20 parts by weight, preferably 5 parts by weight to 10 parts by weight, based on 100 parts by weight of the rubber component.

As the vulcanization agent, a sulfur-based vulcanization agent, an organic peroxide, a bismaleimide, a benzoquinone derivative, a phenolic vulcanization agent, or an oxidated metal oxide such as magnesium oxide may be used. As the sulfur-based vulcanization agent, an inorganic vulcanization agent such as powdered sulfur (S), insoluble sulfur (S), precipitated sulfur (S), or colloidal sulfur may be used.

As the vulcanization accelerator for promoting vulcanization, any one selected from the group consisting of a sulfenamide-based, thiazole-based, thiuram-based, thiourea-based, guanidine-based, dithiocarbamic acid-based, aldehyde-amine-based, aldehyde-ammonia-based, imidazolin-based, or xanthate-based vulcanization accelerator, and a combination thereof may be used. At this time, the vulcanization accelerator may be included in an amount of 0 part by weight to 10 parts by weight, preferably 3 parts by weight to 5 parts by weight, based on 100 parts by weight of the rubber component.

The vulcanization accelerator aid is a combination agent used in combination with the vulcanization accelerator to perfect the promotion effect, and zinc oxide and stearic acid may be used together. If the zinc oxide and the stearic acid are used together, the vulcanization accelerator aid may be respectively used in an amount of 1 part by weight to 5 parts by weight and 0.5 parts by weight to 3 parts by weight with respect to 100 parts by weight of the rubber component to serve as an appropriate vulcanization accelerator aid.

In addition, as the adhesive for improving adhesion of the sealant composition, a natural resin-based adhesive such as a phenol-based resin, a rosin-based resin, or a terpene-based resin, or a synthetic resin-based adhesive such as a petroleum resin, coal tar, or an alkyl phenol-based resin may be used. At this time, the adhesive may be included in an amount of 0 part by weight to 10 parts by weight, preferably 3 parts by weight to 5 parts by weight, based on 100 parts by weight of the rubber component.

Meanwhile, the sound-absorbing material layer 3 is for reducing resonance noise generated in the cavity of the tire 1, and the sound absorbing material layer 3 may have the shape of a sheet extending in the circumferential direction of the tire 1. That is, the sound-absorbing material layer 3 has the shape of a sheet and extends along the circumferential direction of the tire 1, and both ends thereof may meet each other to form a ring shape like the tire 1.

In addition, the sound-absorbing material layer 3 has a thickness of 20 mm to 60 mm, more specifically 30 mm to 60 mm, and may have a width of 10% to 120% with respect to the width of the tread portion of the tire 1. If the thickness of the sound-absorbing material layer 3 is less than 35 mm, the noise reduction performance may be degraded, and if the sound-absorbing material layer 3 is greater than 60 mm, the sound-absorbing material may be abraded by friction with a rim surface in the cavity of the tire 1, which faces the sound-absorbing material.

The sound-absorbing material layer 3 has open cells, and includes a second porous material 31 having an average cell size of 1,200 um to 2,400 µm.

That is, the average cell size of the second porous material 31 is larger than an average cell size of a porous material typically used as a sound-absorbing material, so that the specific surface area between the sealant layer 2 and the sound-absorbing material layer 3 is reduced, thereby improving the flowability of sealant, and even when a foreign substance such as a nail penetrates the tire 1 and the sealant layer 2 and reaches the sound-absorbing material layer 3, the adhesion specific surface area of the surface of the nail and the second porous material 31 is reduced, so that fine fragments of the second porous material 31 may be prevented from degrading the function of the sealant, and the noise reduction performance may be maintained.

If the average cell size of the second porous material 31 is less than 1,200 µm, the flowability of the sealant in contact with the surface may be degraded, and if the average cell size of the second porous material 31 is greater than 2,400 µm, the durability of the sound-absorbing material may be degraded during driving.

The porous material may be any one selected from the group consisting of a porous nonwoven fabric, a porous foam, and a laminate thereof.

Specifically, the porous nonwoven fabric may be a polyester-based nonwoven fabric or a polystyrene-based nonwoven fabric, and the porous foam may be an ether-based polyurethane foam which is a polyurethane foam using polyether polyol as a raw material, an ester-based polyurethane foam which is a polyurethane foam using a polyester polyol as a raw material, an ether/ester-based polyurethane foam which is a polyurethane foam using a polyester polyether polyol as a raw material, a synthetic resin foam such as a polyethylene foam, or a rubber foam such as an ethylene propylene rubber (EPDM) foam and a nitrile rubber (NBR) foam.

Typically, the polyurethane foam may be prepared by subjecting a polyisocyanate compound and a polyhydroxycompound to a urethane reaction.

The sound-absorbing material layer 3 may further include a third porous material 32 stacked on the second porous material 31 and having open cells.

FIG. 2 is a cut-away perspective view of a pneumatic tire according to another embodiment of the present invention, which illustrates a case in which the third porous material 32 is further included.

Referring to FIG. 2, one surface of the second porous material 31 is attached to the inner surface of the tire 1 by the sealant layer 2, and the third porous material 32 is stacked on the other surface of the second porous material 31.

The third porous material 32 has open cells, and may have an average cell size of 100 um to 1,200 µm, more specifically 300 um to 1,000 µm.

That is, the average cell size of the third porous material 32 is smaller than the average cell size of the second porous material 31. Accordingly, the second porous material 31 has an average cell size relatively larger than that of the third porous material 32, and thus, contributes to noise reduction while minimizing the hindrance of the fluidity of the sealant layer 2, and the third porous material 32 has an average cell size relatively smaller than that of the second porous material 31, and thus, may have noise reduction performance greater than that of the second porous material 31.

In addition, the second porous material 31 may have a density of 25 kg/m³ to 40 kg/m3, a hardness of 10 kgf to 20 kgf, a tensile strength of 0.8 kgf/cm² or greater, and an elongation of 70% or greater.

If the density of the second porous material 31 is less than 25 kg/m3, the durability may be degraded, and if greater than 40 kg/m3, the weight of the sound-absorbing material may increase, which may affect the tire performance. If the hardness of the second porous material 31 is less than 10 kgf or greater than 20 kgf, the processibility may be degraded. If the tensile strength of the second porous material 31 is less than 0.8 kgf/cm², the durability may be degraded, and if the elongation of the second porous material 31 is less than 70%, the durability may be degraded.

The third porous material 32 may have a density of 20 kg/m³ to 40 kg/m³, a hardness of 10 kgf to 20 kgf, a tensile strength of 0.8 kgf/cm³ or greater, and an elongation of 70% or greater.

If the density of the third porous material 32 is less than 20 kg/m3, the durability may be degraded, and if greater than 40 kg/m³, the weight may increase, which may affect the tire performance. If the hardness of the third porous material 32 is less than 10 kgf or greater than 20 kgf, the processibility may be degraded. If the tensile strength of the third porous material 32 is less than 0.8 kgf/cm³, the durability may be degraded, and if the elongation of the third porous material 32 is less than 70%, the durability may be degraded.

Meanwhile, the sound-absorbing material layer 3 may further include a first porous material 30 having closed cells between the second porous material 31 and the sealant layer 2. At this time, as the first porous material 30 has closed cells, it is possible to separate the sound-absorbing material layer 3 from the sealant layer 2 to prevent the sealant from permeating into the cells of the sound-absorbing material layer 3 and blocking the cells, thereby degrading the sound absorption performance of the sound absorbing material layer 3, and to prevent fine fragments of the porous material from being mixed with the sealant, thereby degrading the sealing performance of the sealant layer 2.

At this time, the total thickness of the sound-absorbing material layer 3 may be 20 mm to 60 mm, wherein the thickness of the first porous material 30 may be 1 length% to 60 length% of the total thickness of the sound-absorbing material layer, the thickness of the second porous material 31 may be 30 length% to 90 length% of the total thickness of the sound-absorbing material layer, and the thickness of the third porous material 32 may be 10 length% to 70 length% of the total thickness of the sound-absorbing material layer. Specifically, the thickness of the first porous material 30 may be 2 length% to 20 length% of the total thickness of the sound-absorbing material layer, the thickness of the second porous material 31 may be 30 length% to 90 length% of the total thickness of the sound-absorbing material layer, and the thickness of the third porous material 32 may be 30 length% to 60 length% of the total thickness of the sound-absorbing material layer.

If the thickness of the first porous material 30 is less than 1 length% of the total thickness of the sound-absorbing material layer 3, due to the small thickness, there may be a problem in which the sound-absorbing material layer is destroyed during driving so that performance for sealing cells may not be exhibited, and if greater than 60 length%, there may be problem in which the performance of the second porous material 31 and the third porous material 32 may be degraded. If the thickness of the second porous material 31 is less than 10 length% of the total thickness of the sound absorbing material layer 3, a nail penetrated thereinto contacts the third porous material 32, so that there may be a problem in which the nail attracts fine fragments of the sound-absorbing material when coming out, resulting in degrading the self-sealing performance, and if the thickness is 100 length%, noise reduction performance may be degraded compared to when the thickness is less than 100 length%. If the thickness of the third porous material 32 is less than 10 length% of the total thickness of the sound absorbing material layer 3, there may be a problem with the durability of the sound-absorbing material layer during driving, and if greater than 70 length%, the performance of the sound absorbing material layer may not be exhibited.

The first porous material 30 to the third porous material 32 may be attached in a variety of ways. As an example, the second porous material 31 may be attached to the first porous material 30 and the third porous material 32 by an adhesive or a double-sided adhesive tape.

The first porous material 30 and the third porous material 32 differ only in average cell size or density, and since the description of the materials and the like is the same as that for the second porous material 31, repetitive descriptions thereof will be omitted.

As described above, in the present invention, the sound-absorbing material layer 3 is molded into two layers to maintain noise performance by applying a porous material with the same cell size as a typical porous material to the upper layer facing the outside of the tire, and to improve the flowability of the sealant layer 2 by increasing cells of a porous material in the lower layer in contact with the sealant layer 2, thereby reducing the specific surface area between the sealant layer 2 and the sound-absorbing material layer 3. Accordingly, even if a nail penetrates the tire 1 and the sealant layer 2 and reaches the sound-absorbing material layer 3, the adhesion specific surface area of the surface of the nail and the sound-absorbing material layer 3 is reduced, so that fine fragments of the porous material do not degrade the function of the sealant layer 2.

However, if a porous material having large cells compared to a typical porous material is located in the lower layer of the porous material in contact with the sealant layer 2 as described above, a sealant material is introduced between the cells of the porous material due to the centrifugal force generated during the driving of the tire and the compression and release of the porous material, and as a result, the sealant material is impregnated into the cells of the porous material. This consequently inhibits the flowability of the sealant layer 2, and prevents the sealant material from sealing a punctured portion.

Accordingly, the present invention implements a technique in which while the sound-absorbing material layer 3 is located below the sealing material layer 2 as in the prior art, the first porous material 30 having closed cells is attached to the sound-absorbing material layer 3 in contact with the sealant layer 2 to prevent a sealant material from being introduced between the cells of the sound-absorbing material layer 3 during driving of the tire 1, thereby improving the flowability of the sealing layer 2, and even if a nail penetrates the tire 1, the sealant layer 1, and the first porous material 30 and reaches the second porous material 31, the typical function of the sealant layer 2 is maintained.

Hereinafter, embodiments of the present invention will be described in detail so that those skilled in the art may easily carry out the present invention. However, the present invention may be embodied in many different forms, and is not limited to the embodiments set forth herein.

### [Preparation Examples: Preparation of porous material]

A first porous material and a second porous material both having the physical properties as shown in Table 1 below were prepared.

**[Table 1]**

| | Unit | Third porous material | Second porous material | First porous material |
|---|---|---|---|---|
| Cell form | - | Open cell | Open cell | Closed cell |
| Density | kg/m³ | 28.8 | 29.5 | 35 |
| Hardness (ILD25%) | kgf | 12.46 | 17.7 | 15 |
| Tensile strength | kgf / cm² | 1.31 | 0.96 | 1.5 |
| Elongation rate | % | 248.5 | 83.29 | 150 |
| Average cell size | µm | 750 | 1850 | 100 |

| | | | | |
|---|---|---|---|---|
| - Hardness: Measured by JIS K 6400-2 - Tensile strength, elongation: Measured by JIS K6400-5 - density: Measured by JIS K7222 | | | | |

### [Examples 1 and Comparative Examples 1-3: Manufacturing of tire]

In addition, 100 parts by weight of butyl rubber, 400 parts by weight of polyisobutylene, 40 parts by weight of a carbon black additive, and 2 parts by weight of a sulfur-based vulcanization agent were mixed to prepare a sealant composition, and the sealant composition was applied on the inner surface of a tire with the specification of 195/65R15, and then a porous material was attached as shown in Table 2 below to manufacture the tire.

In Table 2 below, Comparative Example 1 is a case in which only the sealant layer was included without the sound-absorbing material layer, Comparative Example 2 is a case in which only the third porous material was attached to the sealant layer to form the sound-absorbing material layer, Comparative Example 3 is a case in which only the first porous material was attached to the sealant layer to form the sound-absorbing material layer, and Example 1 is a case in which the first porous material was attached to the sealant layer, and then the second porous material was bonded to the bottom of the first porous material by using an adhesive, and the third porous material was bonded to the bottom of the second porous material by using an adhesive to form the sound-absorbing material layer by stacking.

At this time, the sound-absorbing layers of Comparative Examples and Examples have the same total thickness.

**[Table 2]**

| | First porous material (thickness) | Second porous material (thickness) | Third porous material (thickness) | Entire sound-absorbing material layer (thickness) |
|---|---|---|---|---|
| Comparati ve Example 1 | - | - | - | - |
| Comparati ve Example 2 | - | - | 40 mm | 40 mm |
| Comparati ve Example 3 | 40 mm | - | - | 40 mm |
| Example 1 | 5 mm | 25 mm | 10 mm | 40 mm |

### [Experimental Example: Measurement of tire performance]

The manufactured tires were tested for sealing effect, high-speed durability, and attachment durability, and the results are shown in Table 3 below.

**[Table 3]**

| Classi ficati on | Conditions | Comparative Example 1 | Comparative Example 2 | Comparative Example 3 | Example 1 |
|---|---|---|---|---|---|
| Sealin g effect | Room temperature | 100% | 0% | 95% | 100% |
| | Sealing effect Low temperatur e of - 30 °C | 100% | 0% | 80% | 85% |
| | Sealing effect High temperatur e of 60 °C | 100% | 0% | 90% | 95% |
| Noise (dB) | | 1.386 | 0.521 | 0.834 | 0.567 |
| | | Noise (dB) 100% | 38% | 60% | 41% |
| High-speed durability test | | Attachment maintained | Attachment maintained | Attachment maintained | Attachment maintained |
| Attachment durability test | | Attachment maintained | Attachment maintained | Attachment maintained | Attachment maintained |

### [Performance evaluation methods]

- Noise test: Using cleat impact test equipment, the resonance sound in the cavity of the tire was measured through the change in size of the force intensity in the vertical direction from the center axis of the tire/wheel while passing through cleats at regular intervals (cleat impact test equipment: a tester that measures the vibration response and vibration attenuation of an axle or suspension when a tire or a tire and suspension combination is impacted by a protrusion) .
- Sealing effect: In order to confirm the self-sealing performance of the tire, a total of 30 specially designed small (body diameter 2.5 mm), medium (body diameter 3.4 mm), and large (body diameter 5.0 mm) nails, 3 each, were driven into a tread region in which the sealant was applied inside the tire. According to each condition, the tire was left to stand at room temperature, or stored in a high-temperature or low-temperature chamber for 12 hours, and then the stored tire was taken out, the nails were removed, and the sealing was confirmed by spraying soapy water. A case in which there was no air leakage due to the same air pressure as the initial air pressure was indicated as 100%.
- High-speed and attachment durability test After a 34-hour test with deceleration and acceleration at 100 km/h at a constant repetition cycle during a 240 km/h high-speed drive, the adhesion and shape maintenance of the sound-absorbing material layer were visually measured.

Referring to Table 3, compared to Comparative Examples 2 and 3, Example 1 had an improved sealing effect at all of room temperature, low temperatures, and high temperatures, and had a good noise reduction effect.

Although preferred embodiments of the present invention have been described in detail above, the scope of the present invention is not limited thereto, and various modifications and improvements by those skilled in the art using the basic concept of the present invention as defined in the following claims also fall within the scope of the present invention.

### (Description of the Reference Numerals or Symbols)

- 1:: Tire
- 2:: Sealant layer
- 3:: Sound-absorbing layer
- 30:: First porous material
- 31:: Second porous material
- 32:: Third porous material

## Claims

1. A tire comprising:
a sound-absorbing material layer located on the inner surface of the tire; and
a sealant layer disposed between the inner surface of the tire and the sound-absorbing material layer, and coated on the inner surface of the tire,
wherein the sound-absorbing material layer includes:
a first porous material having closed cells, and attached to the inner surface of the tire by the sealant layer;
a second porous material stacked on the first porous material, having open cells, having an average cell size of 1,200 um to 2,400 um, and having a thickness of 30 length% to 90 length% of the total thickness of the sound-absorbing material layer; and
a third porous material stacked on the second porous material, and having open cells.

2. The tire of claim 1, wherein the third porous material has an average cell size of 100 um to 1,200 µm.

3. The tire of claim 1, wherein:
the second porous material has a density of 25 kg/m³ to 40 kg/m3, a hardness of 10 kgf to 20 kgf, a tensile strength of 0.8 kgf/cm² or greater, and an elongation of 70% or greater; and
the third porous material has a density of 20 kg/m³ to 40 kg/m3, a hardness of 10 kgf to 20 kgf, a tensile strength of 0.8 kgf/cm² or greater, and an elongation of 70% or greater.
